# EUROPÄISCHE PATENTSCHRIFT

(11) **EP 2 020 044 B1**
(45) Veröffentlichungstag und Bekanntmachung des Hinweises auf die Patenterteilung: **01.09.2010**
(21) Anmeldenummer: 07718454.7
(22) Anmeldetag: 22.05.2007
(51) Int. Cl.: H01L 41/04

(54) **VORRICHTUNG ZUM ANSTEUERN WENIGSTENS EINES PIEZOELEKTRISCHEN STELLTRIEBES EINER EINSPRITZDÜSE FÜR EINE BRENNKRAFTMASCHINE**
DEVICE FOR ACTUATING AT LEAST ONE PIEZO-ELECTRIC ACTUATING DRIVE OF AN INJECTION NOZZLE FOR AN INTERNAL COMBUSTION ENGINE
DISPOSITIF DE COMMANDE D'AU MOINS UN MÉCANISME DE COMMANDE PIÉZOÉLECTRIQUE D'UNE BUSE D'INJECTION POUR UN MOTEUR À COMBUSTION INTERNE

(30) Priorität: 24.05.2006 AT 9012006
(43) Veröffentlichungstag der Anmeldung: 04.02.2009
(73) Patentinhaber: Steinbauer Electronics Development GmbH, 4470 Enns (AT)
(72) Erfinder: STEINBAUER, Herbert, 4203 Altenberg (AT); EDER, Hubert, 4062 Kirchberg/Thening (AT)
(74) Vertreter: Hübscher, Helmut
(86) Internationale Anmeldenummer: PCT/AT2007/000243
(87) Internationale Veröffentlichungsnummer: WO 2007/134353

(56) Entgegenhaltungen:
- EP-A2- 1 085 190
- WO-A-2006/032543

## Beschreibung

### Technisches Gebiet

Die Erfindung bezieht sich auf eine Vorrichtung zum Ansteuern wenigstens eines piezoelektrischen Stelltriebes einer Einspritzdüse für eine Brennkraftmaschine mit einer einen Lade- und einen Entladekreis des piezoelektrischen Stelltriebes zyklisch ansteuernden Steuereinrichtung.

### Stand der Technik

Einspritzdüsen für Brennkraftmaschinen mit piezoelektrischen Stelltrieben zur Betätigung der Düsennadeln zeichnen sich durch sehr kurze Schaltzeiten aus, so daß die in den Brennraum zyklisch eingespritzte Kraftstoffmenge vorteilhaft in Abhängigkeit von der Belastung der Brennkraftmaschine programmbedingt gesteuert werden kann. Zu diesem Zweck werden die schichtartig hintereinandergereihten Piezoelemente der Stelltriebe über einen Ladekreis geladen und über einen Entladekreis entladen, was ein Öffnen und Schließen der Einspritzdüsen zur Folge hat. Die zeitliche Abfolge des Lade- und Entladevorganges wird mit Hilfe einer Steuereinrichtung sichergestellt, die den Lade- und den Entladekreis entsprechend ansteuert, und zwar üblicherweise in Abhängigkeit von abgespeicherten Kennfeldern für die jeweiligen Belastungen der Brennkraftmaschine, so daß durch das Steuerprogramm die jeweils in den Brennraum eingespritzte Kraftstoffmenge über die Öffnungszeiten der Einspritzdüsen und damit auch in einem gewissen Umfang die Leistung der Brennkraftmaschine festgelegt wird. Um die eingespritzte Kraftstoffmenge zur Leistungssteigerung in Abhängigkeit zu erhöhen, müßten folglich die Öffnungszeiten der Einspritzdüsen verlängert werden, was jedoch einen massiven Eingriff in das Steuerungsprogramm der Steuereinrichtung zum Laden und Entladen der piezoelektrischen Stelltriebe erfordert.

### Darstellung der Erfindung

Der Erfindung liegt somit die Aufgabe zugrunde eine Vorrichtung der eingangs geschilderten Art zum Ansteuern wenigstens eines piezoelektrischen Stelltriebes einer Einspritzdüse für eine Brennkraftmaschine so auszugestalten daß eine Leistungssteigerung für die Brennkraftmaschine mit vergleichsweise einfachen Mitteln erreicht werden kann, ohne in das Steuerungsprogramm der Steuereinrichtung zum Laden und Entladen der piezoelektrischen Stelltriebe eingreifen zu müssen.

Die Erfindung löst die gestellte Aufgabe dadurch, daß eine an eine Ladestufe angeschlossene, den piezoelektrischen Stelltrieb elektrisch nachbildende, kapazitive Ersatzlast, eine zusätzliche Entladestufe für den piezoelektrischen Stelltrieb sowie ein von einer Steuerschaltung ansteuerbarer Umschalter vorgesehen sind, der die Ersatzlast oder den piezoelektrischen Stelltrieb mit dem über die Steuereinrichtung gesteuerten Entladekreis verbindet, und daß der piezoelektrische Stelltrieb nach der Abkoppelung vom Entladekreis über die von der Steuerschaltung ansteuerbare zusätzliche Entladestufe in Abhängigkeit von wenigstens einem sich mit der Belastung der Brennkraftmaschine ändernden Parameter zeitverzögert entladbar ist.

Da zufolge dieser Maßnahmen bei einer leistungssteigernden Verlängerung der Öffnungsintervalle der Einspritzdüsen die vorgesehene Steuereinrichtung für die piezoelektrischen Stelltriebe der Einspritzdüsen auf diese Stelltriebe elektrisch nachbildende, kapazitive Ersatzlasten umgeschaltet werden, können die Ersatzlasten durch die Steuereinrichtung an Stelle der piezoelektrischen Stelltriebe entladen werden, so daß sich für die Steuereinrichtung Eingangsgrößen ergeben, wie sie ohne Leistungssteigerung vorliegen. In den Steuerablauf der Steuereinrichtung braucht daher nicht eingegriffen zu werden. Die Ansteuerung der piezoelektrischen Stelltriebe zur leistungssteigernden Verlängerung der Öffnungsintervalle der Einspritzdüsen erfolgt über eine gesonderte Steuerschaltung, die im Bedarfsfall nicht nur den von der Steuereinrichtung gesteuerten Entladekreis für den jeweiligen piezoelektrischen Stelltrieb mit Hilfe eines Umschalters an die aufgeladene Ersatzlast umschaltet, sondern den piezoelektrischen Stelltrieb an eine zusätzliche Entladestufe anschließt, um ihn zeitverzögert zu entladen und damit für eine entsprechende Verlängerung des Einspritzintervalls der Einspritzdüse zu sorgen. Die Verlängerungszeit hängt dabei von sich mit der Belastung der Brennkraftmaschine ändernden Pararmetern ab, wie dies bei leistungssteigernden Verlängerungen des Einspritzintervalls an sich bekannt ist. Mittels der Steuerschaltung werden die zusätzlichen Entladestufen für die piezoelektrischen Stelltriebe programmbedingt in Abhängigkeit von jenen Pararmetern angesteuert, von denen eine allfällige Leistungssteigerung abhängig gemacht wird und die die Steuerschaltung beaufschlagen. Die Ladung der piezoelektrischen Stelltriebe nach ihrer Entladung erfolgt grundsätzlich über den von der Steuereinrichtung angesteuerten Ladekreis. Die Ladung der Ersatzlasten wird üblicherweise über eine gesonderte Ladestufe vorgenommen, was allerdings nicht zwingend ist.

Damit die Ersatzlasten vor einer Ansteuerung des Entladekreises durch die Steuereinrichtung über den Umschalter mit dem Entladekreis verbunden werden, kann die Steuerschaltung den Umschalter in Abhängigkeit vom Spannungsverlauf eines vorausgehenden Beaufschlagungszyklus ansteuern. Es kann ja davon ausgegangen werden, daß sich in unmittelbar aufeinanderfolgenden Beaufschlagungszyklen keine wesentlichen Änderungen hinsichtlich des Spannungsverlaufes ergeben, so daß an Hand des Spannungsverlaufes eines vorausgegangenen Beaufschlagungszyklus für ein rechtzeitiges Umschalten des durch die Steuereinrichtung angesteuerten Entladekreises auf die Ersatzlast gesorgt werden kann.

### Kurze Beschreibung der Zeichnung

In der Zeichnung ist der Erfindungsgegenstand beispielsweise dargestellt. Es zeigen
- Fig.: 1 eine erfindungsgemäße Vorrichtung zum Ansteuern wenigstens eines piezoelektrischen Stelltriebes einer Einspritzdüse für eine Brennkraftma- schine in einem schematischen Blockschaltbild,
- Fig. 2: eine der Fig. 1 entsprechende Darstellung einer Ausführungsvariante ei- ner erfindungsgemäßen Vorrichtung und
- Fig. 3: den Spannungs- und den Stromverlauf während eines Beaufschlagungs- zyklus eines piezoelektrischen Stelltriebes.

### Weg zur Ausführung der Erfindung

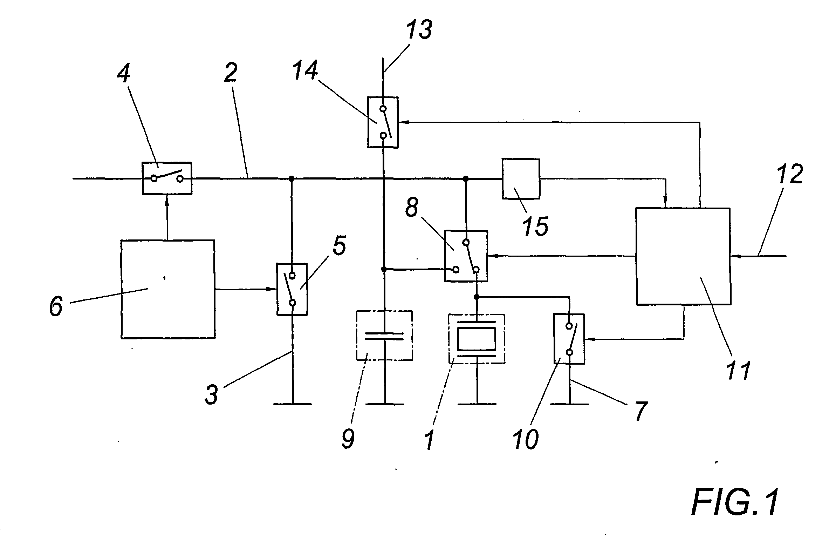

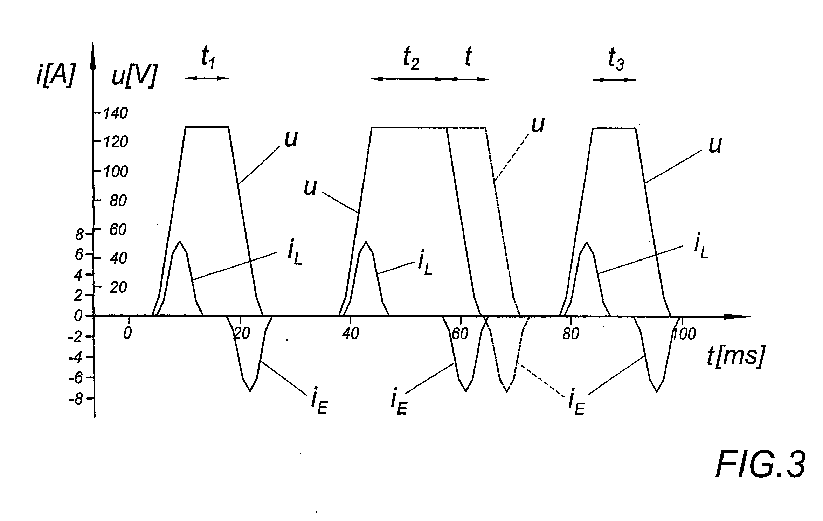

Gemäß der Fig. 1 wird der piezoelektrische Stelltrieb 1 für eine Einspritzdüse einer Brennkraftmaschine über einen Ladekreis 2 geladen und über einen Entladekreis 3 entladen, wobei der Ladekreis 2 und der Entladekreis 3 über Steuerschalter 4, 5 von einer Steuereinrichtung 6 angesteuert werden. Mit dem Laden des piezoelektrischen Stelltriebes 1 durch ein Schließen des Steuerschalters 4 wird die Einspritzdüse geöffnet und offengehalten bis der piezoelektrische Stelltrieb 1 über den Entladekreis 3 durch ein Ansteuern des zugehörigen Steuerschalters 5 entladen wird. Wie der Fig. 3 entnommen werden kann, baut sich am piezoelektrischen Stelltrieb 1 während der Ladung eine Spannung u auf, die bei der Entladung wieder abfällt. Dementsprechend fließt über den Ladekreis 2 während des Aufbaus der Spannung u am piezoelektrischen Stelltrieb 1 ein Ladestrom i_{L} und während des Spannungsabbaus ein Entladestrom i_{E}, der gegensinnig zum Ladestrom i_{L} fließt. In dem dargestellten Einspritzintervall einer Einspritzdüse ergibt sich während der Zeitspanne t₁ eine Voreinspritzung, während der Zeitspanne t₂ eine Haupteinspritzung und während einer Zeitspanne t₃ eine Nacheinspritzung von Kraftstoff. Soll die Leistung im Bedarfsfall gesteigert werden, so wird die Zeitspanne t₂ für die Haupteinspritzung um eine Zeitspanne t verlängert, was eine zeitverzögerte Entladung des piezoelektrischen Stelltriebes 1 voraussetzt, wie dies an Hand des strichliert ergänzten Verlaufes der Spannung u am piezoelektrischen Stelltrieb 1 abgelesen werden kann.

Damit eine solche Verlängerung der Haupteinspritzung um die Zeitspanne t sichergestellt wird, wird nicht die Steuereinrichtung 6 hinsichtlich der Ansteuerung des Steuerschalters 5 für den Entladekreis 3 umprogrammiert, sondern der piezoelektrische Stelltrieb 1 über eine gesonderte Entladestufe 7 entladen. Zu diesem Zweck ist ein Umschalter 8 vorgesehen, der den Entladekreis 3 vom piezoelektrischen Stelltrieb 1 auf eine kapazitive Ersatzlast 9 umschaltet, die den piezoelektrischen Stelltrieb 1 elektrisch nachbildet, so daß nach einem Umschalten des Umschalters 8 nicht der piezoelektrische Stelltrieb 1, sondern die Ersatzlast 9 über den Entladekreis 3 entladen wird, ohne in die Steuerung des Entladekreises 3 durch die Steuereinrichtung 6 eingreifen zu müssen. Der über den Entladekreis 3 fließende Entladestrom i_{E} der Ersatzlast 9 entspricht ja dem Entladestrom des piezoelektrischen Stelltriebes 1.

Der piezoelektrische Stelltrieb 1 wird im Vergleich zu seiner Ansteuerung über die Steuereinrichtung 6 um die Zeitspanne t verzögert über die Entladestufe 7 entladen, indem der Steuerschalter 10 dieser Entladestufe 7 von einer zusätzlichen Steuerschaltung 11 angesteuert wird, die von ausgewählten, sich mit der Belastung der Brennkraftmaschine ändernden Pararmetern, beispielsweise der Drehzahl der Brennkraftmaschine, der Gaspedalstellung und dem Ladedruck, beaufschlagt wird. Die Beaufschlagung der Steuerschaltung 11 mit wenigstens einem dieser Pararmeter ist durch den Eingangspfeil 12 angedeutet. Aufgrund des der Steuerschaltung 11 zugrundeliegenden Steuerprogramms wird in Abhängigkeit von den anliegenden Pararmetern festgelegt, ob eine Leistungssteigerung vorgenommen werden soll. Ist dies der Fall, so wird nach dem Laden des piezoelektrischen Stelltriebes 1 über den Ladekreis 2 der Umschalter 8 durch die Steuerschaltung 11 angesteuert, damit der Steuereinrichtung 6 eine ordnungsgemäße Entladung des piezoelektrischen Stelltriebes 1 durch eine Entladung der Ersatzlast 9 vorgetäuscht werden kann, während die Entladung des piezoelektrischen Stelltriebes 1 über die zusätzliche Entladestufe 7 zeitverzögert vorgenommen wird. Nach der Entladung des piezoelektrischen Stelltriebes 1 über die Entladestufe 7 ist der Umschalter 8 durch die Steuerschaltung 11 wieder umzuschalten, um das Laden des piezoelektrischen Stelltriebes 1 über den durch die Steuereinrichtung 6 angesteuerten Ladekreis 2 sicherzustellen. Nach der Entladung der Ersatzlast 9 ist diese wieder zu laden, was über eine Ladestufe 13 erreicht wird, deren Steuerschalter 14 von der Steuerschaltung 11 angesteuert wird.

Um zu verhindern, daß eine Betätigung des Umschalters 8 nach dem Ansteuern des Steuerschalters 5 für den Entladekreis 3 erfolgt, ist ein Geber 15 für die am piezoelektrischen Stelltrieb 1 bzw. an der Ersatzlast 9 anliegende Spannung u vorgesehen. Da die Steuerschaltung 11 mit diesem Geber 15 verbunden ist, kann über die Steuerschaltung 11 der Spannungsverlauf der jeweiligen Beaufschlagungszyklen überwacht und an Hand eines vorausgehenden Beaufschlagungszyklus die Zeitspanne t₂ abgeschätzt werden, um innerhalb dieser Zeitspanne t₂ die Umschaltung des Umschalters 8 vornehmen zu können.

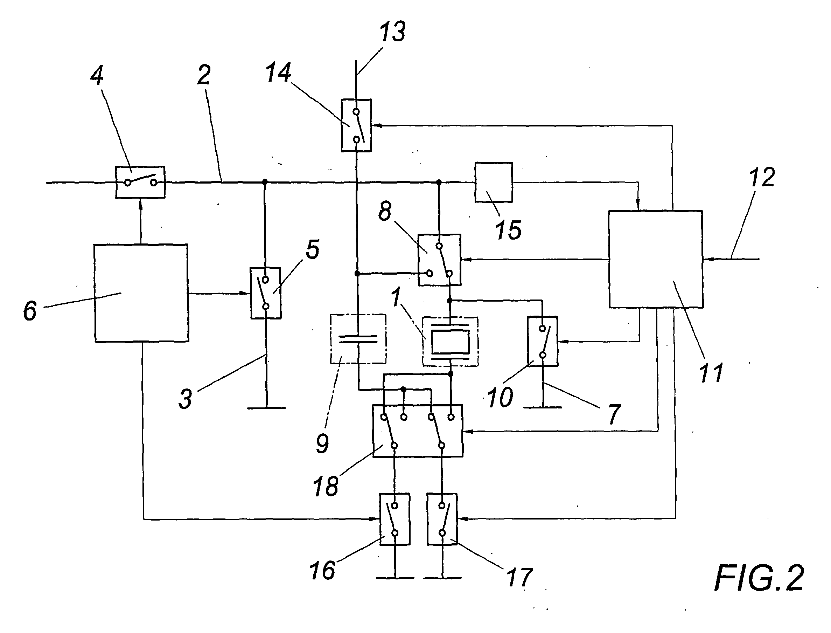

In vielen Fällen werden die einzelnen piezoelektrischen Stelltriebe 1 über einzelne Steuerschalter 16 durch die Steuereinrichtung 6 je für sich angewählt, wie dies der Fig. 2 entnommen werden kann. In einem solchen Fall ist auch die Ersatzlast 9 mit einem entsprechenden Steuerschalter 17 zu versehen, damit die Eingangsgrößen für die Steuereinrichtung 6 nach dem Umschalten des Entladekreises vom jeweiligen piezoelektrischen Stelltrieb 1 auf die zugehörige Ersatzlast gleich bleiben. Dies bedeutet, daß auch für die Steuerschalter 16 und 17 eine entsprechende Umschalteinrichtung 18 vorgesehen werden muß, die über die Steuerschaltung 11 zusammen mit dem Umschalter 8 anzusteuern ist. Im übrigen ändert sich die Funktion der Vorrichtung hinsichtlich der Ladung des piezoelektrischen Stelltriebes 1 über den Ladekreis 2 und die Entladung wahlweise über den Entladekreis 3 oder die Entladestufe 7 nicht.

## Patentansprüche

1. Vorrichtung zum Ansteuern wenigstens eines piezoelektrischen Stelltriebes einer Einspritzdüse für eine Brennkraftmaschine mit einer einen Lade- und einen Entladekreis des piezoelektrischen Stelltriebes zyklisch ansteuernden Steuereinrichtung, **dadurch gekennzeichnet, daß** eine an eine Ladestufe (13) angeschlossene, den piezoelektrischen Stelltrieb (1) elektrisch nachbildende, kapazitive Ersatzlast (9), eine zusätzliche Entladestufe (7) für den piezoelektrischen Stelltrieb (1) sowie ein von einer Steuerschaltung (11) ansteuerbarer Umschalter (8) vorgesehen sind, der die Ersatzlast (9) oder den piezoelektrischen Stelltrieb (1) mit dem über die Steuereinrichtung (6) gesteuerten Entladekreis (3) verbindet, und daß der piezoelektrische Stelltrieb (1) nach der Abkoppelung vom Entladekreis (3) über die von der Steuerschaltung (11) ansteuerbare zusätzliche Entladestufe (7) in Abhängigkeit von wenigstens einem sich mit der Belastung der Brennkraftmaschine ändernden Parameter zeitverzögert entladbar ist.

2. Vorrichtung nach Anspruch 1, **dadurch gekennzeichnet, daß** die Steuerschaltung (11) den Umschalter (8) in Abhängigkeit vom Spannungsverlauf eines vorausgehenden Beaufschlagungszyklus ansteuert.

## Claims

1. Apparatus for controlling at least one piezoelectric actuating drive of an injection nozzle for an internal combustion engine, having a control device which cyclically controls a charging circuit and a discharging circuit of the piezoelectric actuating drive, **characterised in that** there are provided a capacitive equivalent load (9), which is connected to a charging stage (13) and electrically simulates the piezoelectric actuating drive (1), an additional discharging stage (7) for the piezoelectric actuating drive (1) and a change-over switch (8) which can be controlled by a control circuit (11) and connects the equivalent load (9) or the piezoelectric actuating drive (1) to the discharging circuit (3) which is controlled via the control device (6), and that after being decoupled from the discharging circuit (3) the piezoelectric actuating drive (1) can be discharged with a time delay via the additional discharging stage (7), which can be controlled by the control circuit (11), in dependence upon at least one parameter which changes with the loading of the internal combustion engine.

2. Apparatus as claimed in claim 1, **characterised in that** the control circuit (11) controls the change-over switch (8) in dependence upon the voltage progression of a preceding application cycle.

## Revendications

1. Dispositif de commande d'au moins un mécanisme de commande piézoélectrique d'une buse d'injection pour un moteur à combustion interne, avec un dispositif de commande commandant cycliquement un circuit de charge et de décharge du mécanisme de commande piézoélectrique, **caractérisé en ce qu'**une charge de substitution (9) capacitive, reproduisant électriquement le mécanisme de commande piézoélectrique (1), raccordée à un étage de charge (13), un étage de décharge (7) supplémentaire pour le mécanisme de commande piézoélectrique (1) ainsi qu'un commutateur (8) susceptible d'être commandé par un circuit de commande (11) sont prévus, le commutateur (8) reliant la charge de substitution (9) ou le mécanisme de commande piézoélectrique (1) au circuit de décharge (3) commandé par l'intermédiaire du dispositif de commande (6), et **en ce que** le mécanisme de commande piézoélectrique (1), après désaccouplement vis-à-vis du circuit de décharge (3), par l'intermédiaire de l'étage de décharge (7) susceptible d'être commandé par le circuit de commande (11), peut être déchargé de façon temporellement retardée en fonction d'au moins un paramètre variant avec la sollicitation du moteur à combustion interne.

2. Dispositif selon la revendication 1, **caractérisé en ce que** le circuit de commande (11) commande le commutateur (8) en fonction de l'allure de la tension d'un cycle de sollicitation précédent.
